(19) Europäisches Patentamt

European Patent Office

Office européen des brevets

(11) Veröffentlichungsnummer: **0 528 110 B1**

(12) **EUROPÄISCHE PATENTSCHRIFT**

(45) Veröffentlichungstag der Patentschrift: **28.06.95**

(51) Int. Cl.6: **B01D 53/00**, C02F 3/02

(21) Anmeldenummer: **92107765.7**

(22) Anmeldetag: **08.05.92**

(54) **Verfahren zur biologischen Abluftreinigung.**

(30) Priorität: **17.08.91 DE 4127267**

(43) Veröffentlichungstag der Anmeldung:
**24.02.93 Patentblatt 93/08**

(45) Bekanntmachung des Hinweises auf die
Patenterteilung:
**28.06.95 Patentblatt 95/26**

(84) Benannte Vertragsstaaten:
**AT BE CH DE DK ES FR GB IT LI NL SE**

(56) Entgegenhaltungen:
**EP-A- 0 074 100**
**EP-A- 0 186 925**
**EP-B- 0 133 222**
**US-A- 3 828 525**
**US-A- 3 876 535**

(73) Patentinhaber: **Degussa Aktiengesellschaft**
**Weissfrauenstrasse 9**
**D-60311 Frankturt (DE)**

(72) Erfinder: **Stockhammer, Stefan**
**Kurmme Gewann 12**
**W-6450 Hanau 9 (DE)**
Erfinder: **Schäfer-Treffenfeldt, Wiltrud, Dr.**
**Eichendorffstrasse 4**
**W-6053 Obertshausen (DE)**
Erfinder: **Zetzmann, Klaus, Dr.**
**Julius-Echter-Strasse 2**
**W-8752 Kleinostheim (DE)**
Erfinder: **Kirgios, Ioannis, Dr.**
**Erlenweg 7**
**W-5047 Wessling (DE)**
Erfinder: **Theissen, Ferdinand, Dr.**
**Sommersberg 17**
**W-5303 Bornheim 3 (DE)**
Erfinder: **Berger, Michel, Dr.**
**Deiringser Weg 14a**
**W-4770 Soest (DE)**

EP 0 528 110 B1

**Beschreibung**

Die vorliegende Erfindung betrifft ein Verfahren zur Abluftreinigung, bei dem durch biologisch abbaubare Verbindungen verunreinigte, sauerstoffhaltige Gase mit einer wässrigen Mikroorganismensuspension in Kontakt gebracht werden.

Reinigungsverfahren dieser Art sind im Prinzip bekannt, jedoch häufig mit deutlichen Nachteilen behaftet. So können bei niedrigen Schadstoffkonzentrationen in der wässrigen Suspension nur geringe Konzentrationen an aktiver Biomasse aufrechterhalten werden. Dies muß entweder durch große Volumina und Umwälzmengen der Biosuspension kompensiert oder durch kontinuierliche Zufütterung von Nährstoffen verhindert werden. In diesem Zusammenhang sei die Schrift EP-A-0 133 222 genannt, wo die zur Wäsche verwendete, im Kreis durch den Biowäscher und einen Verweilbehälter geführte Mikroorganismensuspension ständig durch in einer gesondert betriebenen Vorrichtung (Fermenter) in ausreichender Menge herangezüchteten Biomasse ergänzt wird.

Hohe Schadstoffkonzentrationen erfordern, um einen ausreichenden mikrobiologischen Abbau zu gewährleisten, lange Verweilzeiten und damit ein großes Volumen an Biosuspension im Hold-up. Insbesondere bei relativ geringer Wasserlöslichkeit der Schadstoffkomponenten wird dabei auch ein hoher apparativer Aufwand und ein hohes Verhältnis von Waschflüssigkeit zur Gasmenge notwendig um einen ausreichenden Stoffübergang zu gewährleisten.

In der Fachwelt gilt die Meinung, daß der Einsatz von Anlagen zur biologischen Abluftreinigung nach dem Prinzip eines Biowäschers dort seine Grenzen findet, wo die Henry-Koeffizienten der Schadstoffe als Maß für deren Wasserlöslichkeit einen Wert von 10 übersteigen [Schippert, Tagung "Biotechn. Behandlung lösemittelhaltiger Abluft", 1990, Essen].

Zur Überwindung dieser Grenzen wird der Einsatz von Lösungsvermittlern [Schippert, 1989] und von Membranverfahren [Fischer, K, et al, Chem. Ind. 5 (1990) 56 - 58; Tagung "Biolog. Abluftreinigung", 1989, Köln] vorgeschlagen. Die zur Realisierung der benötigten Stoffaustauschfläche in Waschkolonnen üblicherweise eingesetzten Einbauten wie geordnete Packungen oder verschiedene Füllkörper zeigen beim Betrieb mit Biosuspension eine starke Neigung zur Verstopfung oder Verkrustung [Kohler Fortschr.-Ber. VDI-Z, Reihe 15 (1982) Nr. 22]. Dadurch wird vor allem die Realisierung von großen Austauschflächen begrenzt. Dieselben Effekte treten auch beim Einsatz von Wäschern nach dem Tropfkörperprinzip, wie sie in DE-A-22 37 929 beschrieben werden, auf.

Alternativ dazu eingesetzte Strahlwäscher [EP-B-0 133 222] arbeiten im Vergleich zu Waschkolonnen mit einem sehr hohen Verhältnis von Waschflüssigkeit zur Gasmenge und sind technisch sinnvoll nur für kleinere Gasströme einsetzbar.

Die Reinigungsleistung der meisten bekannten autark betriebenen Anlagen zur biologischen Abluftreinigung ist unmittelbar abhängig von einer optimalen Abstimmung zwischen der Anzahl der Mikroorganismen sowie deren Aktivität und Adaptionszustand und der in den Wäscher durch die Abluft eingebrachten Schadstofffracht. Die Einstellung eines entsprechenden Gleichgewichtes nimmt dabei längere Zeit in Anspruch. Stärkere Änderungen der Schadstoffkonzentration sowie eine sich ändernde Zusammensetzung der Schadstoffe in den Abgasen führen daher zu einer Verschlechterung der Reinigungsleistung, bis hin zum völligen Zusammenbruch des biologischen Systems. Die meisten bekannten Anlagen benötigen nach Betriebsstörungen und nach längeren Anlagenstillständen Anfahrzeiten bis hin zu mehreren Tagen oder sogar Wochen, bis sie wieder ihre volle Leistungsfähigkeit erreichen.

Auch bei kürzeren Stillstandszeiten, z. B. am Wochenende oder über Nacht ist oft die Zufütterung von entsprechenden Nährstoffen erforderlich, um eine ausreichende Aktivität und Adaption der Mikroorganismen aufrecht zu erhalten [VDI 3478, DE-A-30 00 705].

Enthalten die zu reinigenden Abgase schwer abbaubare oder nichtabbaubare Substanzen oder entstehen beim Abbau schwer abbaubare oder nichtabbaubare Zwischenprodukte, erfolgt bei autarkem Betrieb des Biowäschers eine Anreicherung dieser Stoffe in der Biosuspension.

Dies kann zu einer Schädigung der Mikroorganismen bis hin zum vollständigen Absterben führen oder die Reinigungsleistung durch ein Ausstrippen dieser Substanzen aus der Biosuspension im Wäscher verschlechtern.

Die Notwendigkeit, überschüssige Biomasse oder Kreislaufflüssigkeit zur Vermeidung von Aufsalzungen auszuschleusen, erfordert bei den bekannten Biowäscheranlagen, wie z. B. in DE-A-36 20 728 beschrieben, entsprechende Vorrichtungen zur Abtrennung von Biomasse aus der Biosuspension.

Aufgabe der Erfindung ist es, ein Verfahren zur Abluftreinigung zu entwickeln, das bei relativ geringem apparativem und verfahrenstechnischem Aufwand geeignet ist, sowohl Abgasströme mit sehr geringen Schadstoffgehalten als auch solche mit wesentlich höheren Gehalten zu reinigen.

Gegenstand der Erfindung ist ein Verfahren zur Abluftreinigung, bei dem man das durch biologisch abbaubare Substanzen verunreinigte sauerstoffhaltige Abgas mit einer wäßrigen Suspension von Mikroorganismen in Kontakt bringt und dabei gemäß den Ziffern a), b) und c) des Anspruchs 1 vorgeht.

Siebbodenkolonnen werden für die Erzeugung eines intensiven Gas/Flüssigkeitskontaktes eingesetzt. Dadurch erreicht man eine hohe Absorptionsrate auch mit niedrigen Waschflüssigkeitsmengen. Ein Verstopfen oder Verkrusten der Siebböden tritt bei Bohrungen mit einem Durchmesser von bevorzugt > 3 mm nicht auf.

Der Kontakt zwischen Gas und Flüssigkeit erfolgt vorzugsweise in einem Verhältnis von Gasvolumenstrom (unter Normbedingungen) zu Flüssigkeitsvolumenstrom von 1 : 0,005 bis 1 : 0,015. Pro $m^3$ zu reinigendes Gas werden bevorzugt 5 - 15 l Waschflüssigkeit umgepumpt. Während des Kontaktes gehen die Schadstoffe über die Phasengrenzfläche an der Oberfläche der Gasblasen in Lösung. Das dafür notwendige Konzentrationsgefälle wird durch den Abbau der Schadstoffe durch die in der Biosuspension enthaltenen Mikroorganismen aufrechterhalten.

Während der Kontaktzeit mit dem Gas führen die schnell erfolgenden ersten Schritte des Schadstoffabbaues dazu, daß dieses Konzentrationsgefälle auch in der Grenzschicht aufrechterhalten wird und sich dort keine Sättigungskonzentration einstellt.

Diese Vorgänge werden durch Absorption der Schadstoffe an der Oberfläche der suspendierten Biomasse unterstützt.

Je nach notwendigem Abscheidegrad und Konzentration sowie Wasserlöslichkeit der Schadstoffe können auch mehrstufig betriebene Siebbodenkolonnen eingesetzt werden.

Die Konzentration der Biomasse, die aus der biologischen Stufe der Kläranlage zugeführt wird, beträgt dabei 4 - 12 g/l, wobei Konzentrationen über 7 g/l bevorzugt werden.

Die dem Biowäscher zugeführte Biosuspension weist einen pH-Wert zwischen 6,5 und 7,0 auf. Wenn notwendig, wird er im Wäscher durch die Zugabe von verdünnten Mineralsäuren oder Laugen auf diesem Wert gehalten oder auf den je nach Abgaszusammensetzung für Absorption und Adsorption optimalen pH-Wert zwischen 6 und 8 eingestellt.

Die Temperatur der zugeführten Biosuspension liegt zwischen 15 und 30 °C, die Temperatur im Biowäscher zwischen 20 und 30 °C.

Die Menge der dem Biowäscher kontinuierlich zugeführten aktiven Biomasse kann zur Anpassung an unterschiedliche Abluftsituationen sehr schnell geändert werden. Durch die Veränderung der im Vergleich zum Hold-up in der Kläranlage sehr geringen Entnahmemenge, wird das biologische System in der Kläranlage nicht gestört. Dadurch kann sehr schnell auf Änderungen in der Konzentration und der Zusammensetzung der Schadstoffe reagiert werden.

Durch den kontinuierlichen Austausch von Biosuspension gelingt es auch bei niederen Schadstoffkonzentrationen eine aktive Mikroorganismenpopulation im Wäscher aufrecht zu erhalten. Hohe Schadstoffkonzentrationen sowie ein langsamer Schadstoffabbau führen nicht mehr automatisch zu einem großem Hold-up. Hohe Konzentrationsspitzen im Abgas können abgefangen werden, da ein Teil des Schadstoffabbaues in die Kläranlage verlagert werden kann.

Durch den kontinuierlichen Austausch von Biosuspension können sich schwer abbaubare Stoffe nicht mehr im Biowäscher anreichern.

Die Mikroorganismen aus der biologischen Stufe der Kläranlage sind für die auftretenden Abluftsituationen immer ausreichend adapatiert, da die entsprechenden Schadstoffe auch im Abwasser der Betriebe vorkommen. Dadurch können sehr schnelle Anfahrzeiten nach Anlagenstillständen oder Betriebsstörungen realisiert werden.

Durch das Verbundsystem zwischen Abwasser- und Abluftreinigung sind alle biotechnologischen Maßnahmen zur Aufrechterhaltung einer aktiven Mikroorganismenpopulation wie intensive Belüftung, pH-Korrektur oder Ausschleusung von Überschußschlamm, die für einen erfolgreichen Betrieb der biologischen Abwasserreinigung durchgeführt werden, ohne zusätzlichen Aufwand auch für den Biowäscher wirksam.

Mit dem erfindungsgemäßen Verfahren gelingt es, sowohl Abgase mit sehr geringen Schad- oder Geruchsstoffkonzentrationen < ~ 50 ppm als auch Abgase mit relativ hohen Konzentrationen schwer wasserlöslicher Schadstoffe (Henry-Koeffizient der Hauptkomponente z. B. = 14 bar) zu reinigen. Das beschriebene Verfahren ist besonders geeignet für große Abgasmengen (10.000 bis über 100.000 $m^3$/h).

Dies gilt vor allem, wenn sich die Schadstoffkonzentration insgesamt, sowie das Mengenverhältnis der verschiedenen Komponenten der Schadstofffracht innerhalb eines kurzen Zeitraumes stark ändern können. Als ein besonderer Vorteil des Verfahrens haben sich die kurzen Anfahrzeiten nach längeren Anlagenstillständen oder Betriebsstörungen erwiesen.

Die Erfindung wird nachfolgend anhand zweier Ausführungsbeispiele näher erläutert:

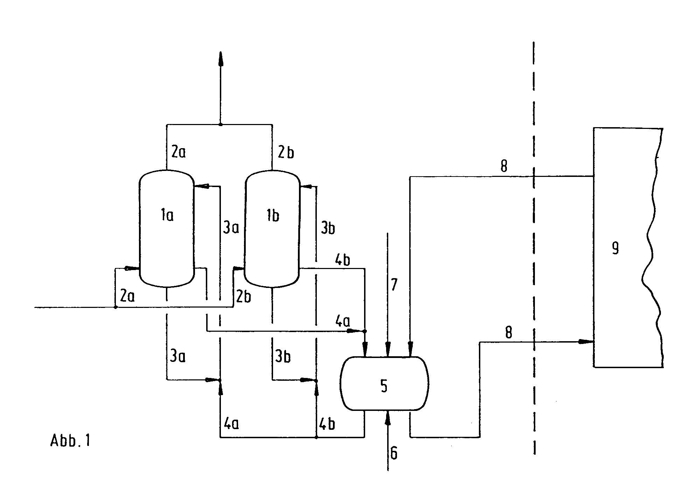

Fig. 1 zeigt die Anordnung für das erste Beispiel. Es handelt sich dabei um eine Anlage zur Reinigung von stark geruchsbelasteten Ablüften. Hauptgeruchsträger sind organische Schwefelverbindungen. Die Gesamtkonzentration der Geruchsstoffe beträgt ca. 10 ppm.

Durch zwei parallel betriebenen Siebbodenkolonnen (1a, 1b) wird jeweils ein Abgasstrom von 60.000 $m^3$/h (2a, 2b) geführt. Die Kolonnen werden jeweils über einen Kreislauf im Gegenstrom mit 200 $m^3$/h Biosuspension beaufschlagt (3a, 3b). In einem 2. Kreislauf (4a, 4b) werden 25 % dieses Flüssigkeitsstromes über einen Verweilzeitbehälter (5) mit 30 $m^3$ Inhalt geführt. Dieser Behälter wird über die Leitung (6) mit Luft begast. Über die Leitung (7) erfolgt bei Bedarf eine pH-Wert-Korrektur.

Über einen weiteren Kreislauf (8) werden 5 % des Hold-up der Biosuspension im Wäschersystem mit frischer, hochaktive Mikroorganismen enthaltender Biosuspension aus der biologischen Stufe der Abwasserreinigungsanlage (9) ausgetauscht.

Wie olfaktometrische Messungen zeigen, wird mit dieser Anlage eine Geruchsminderung von über 80 % erreicht.

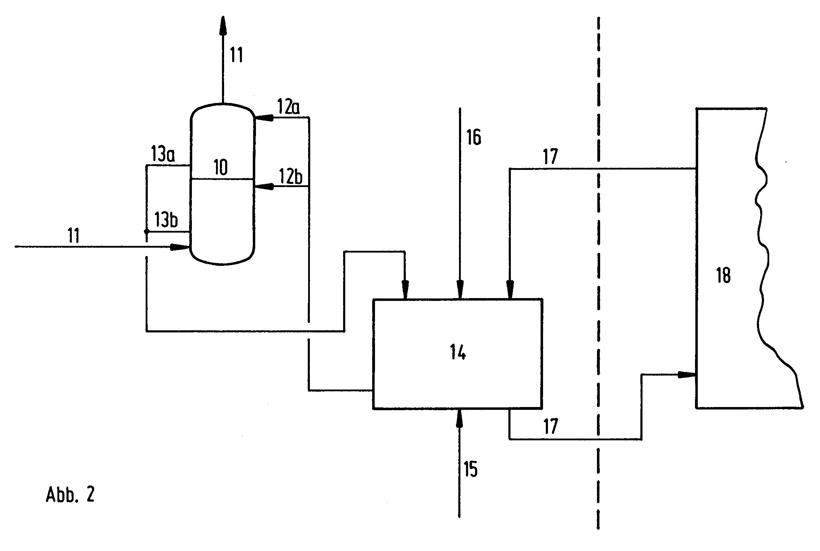

Fig. 2 zeigt die Anordnung für das zweite Beispiel. Durch eine zweistufig betriebene Siebbodenkolonne (10) wird ein Abgasstrom von 10 $m^3$/h geführt. Jede dieser Stufen wird mit einer Biosuspensionsmenge von 100 l pro Stunde (12a, 12b) beaufschlagt. Nach dem Kontakt mit dem Gas wird die Biosuspension (13a, 13b) zurück in den 70 l fassenden Verweilzeitbehälter (14) geführt. Über die Leitung (15) wird dieser Behälter mit Luft begast. Über Leitung (16) erfolgt bei Bedarf eine pH-Wert-Korrektur.

In einem zweiten Kreislauf (17) werden 5 % des Hold-up der Biosuspension im Wäschersystem mit frischer, hochaktive Mikroorganismen enthaltender Biosuspension aus der biologischen Stufe der Abwasserreinigungsanlage (18) ausgetauscht. Tabelle 1 und 2 zeigen die mit dieser Anordnung erzielten Reinigungsleistungen für Abgase die als Hauptkomponenten Methylmetacrylat (MMA, Henry-Koeffizient = 14) und Butylacrylat (BA) enthalten.

Tab. 1: Reinigungsleistung des Verfahrens nach Fig. 2

Reinigung eines Mehrkomponentengemisches, Hauptkomponenten Methylmetacrylat (MMA) und Butylacrylat (BA). Messung der Schadstoffkonzentrationen mit FID als Summenparameter Gesamtkohlenstoff. Konzentrationsangaben berechnet auf MMA.

| | 1. Stufe | | | 2. Stufe | |
|---|---|---|---|---|---|
| | $c_{ROH}$ (ppm) | $c_{REIN}^1$ (ppm) | AG 1 | $c_{REIN}^2$ (ppm) | AG 2 |
| | 125 | 51 | 60 % | 21 | 83 % |
| | 560 | 202 | 64 % | 60 | 90 % |
| | 1010 | 373 | 62% | 101 | 87 % |
| | 1450 | 536 | 63% | 215 | 85 % |

4

Tab. 2: Reinigungsleistung des Verfahrens nach Fig. 2.

Reinigung eines Mehrkomponentengemisches,
Hauptkomponenten MMA und BA. Messung der
Schadstoffkonzentrationen mit GC.

| Stoff | $c_{ROH}$ (ppm) | 1. Stufe | | 2. Stufe | |
|---|---|---|---|---|---|
| | | $c_{REIN}1$ (ppm) | AG 1 | $c_{REIN}2$ (ppm) | AG 2 |
| **Beispiel 1** | | | | | |
| MMA | 588 | 173 | 71 % | – | – |
| BA | 120 | 45 | 62 % | – | – |
| Sonst. | 159 | 120 | 25 % | – | – |
| | | | $\Sigma = 61$ % | | |
| **Beispiel 2** | | | | | |
| MMA | 728 | 225 | 69 % | – | – |
| BA | 148 | 61 | 59 % | – | – |
| Sonst. | 65 | 27 | 59 % | – | – |
| | | | $\Sigma = 67$ % | | |
| **Beispiel 3** | | | | | |
| MMA | 1091 | – | – | 108 | 90 % |
| BA | 92 | – | – | 43 | 54 % |
| Sonst. | 41 | – | – | < 1 | 99 % |
| | | | | $\Sigma = 88$ % | |
| **Beispiel 4** | | | | | |
| MMA | 3552 | – | – | 162 | 96 % |
| BA | 132 | – | – | 46 | 66 % |
| Sonst. | 170 | – | – | 110 | 39 % |
| | | | | $\Sigma = 92$ % | |

```
MMA       = Methylmetacrylat, BA = Butylacrylat

C
 ROH      = Schadstoffkonz. beim Kolonneneintritt

C
 REIN 1   = Schadstoffkonz. nach der 1. Stufe

C
 REIN 2   = Schadstoffkonz. nach der 2. Stufe

AG 1      = Abscheidegrad nach der 1. Stufe

AG 2      = Abscheidegrad nach der 2. Stufe

          [Def. d. AG = (C    - C    ) / C    * 100 %]
                          ROH    REIN     ROH
```

**Patentansprüche**

1. Verfahren zur Abluftreinigung, bei dem man das durch biologisch abbaubare Verbindungen verunreinigte, sauerstoffhaltige Abgas mit einer wäßrigen Suspension von Mikroorganismen

   a) in einer oder mehreren Siebbodenkolonne(n) innerhalb einer Zeit von 0,5 bis 10 sec. in Kontakt bringt,

   b) die Suspension anschließend zumindest zum Teil einem Verweilzeitbehälter zuführt und nach der Verweilzeit von 10 bis 30 min erneut gemäß a) mit dem Abgas in Kontakt bringt, wobei

   c) die Biosuspension mit einer Austauschrate von 5 bis 50 %/h, bezogen auf den Hold-up in dem Wäschersystem gegen eine aktive Mikroorganismen enthaltende Biosuspension aus der biologischen Stufe einer Abwasserreinigungsanlage ausgetauscht wird, in der unter anderen die gleichen Schadstoffe abgebaut werden, wie sie aus dem Abgas zu entfernen sind.

2. Verfahren gemäß Anspruch 1, dadurch gekennzeichnet, daß die Kontaktierung zwischen Gas und Biosuspension in einer mehrstufig betriebenen oder mehreren hintereinander oder parallel geschalteten Siebbodenkolonnen erfolgt.

3. Verfahren gemäß den Ansprüchen 1 oder 2, dadurch gekennzeichnet, daß die Austauschrate der Biosuspension unter 10 %/h liegt.

4. Verfahren nach einem oder mehreren der Ansprüche 1 bis 3, dadurch gekennzeichnet, daß das Verhältnis von Gasvolumenstrom unter Normalbedingungen zu Flüssigkeitsvolumenstrom 1 : 0,005 bis 1 : 0,015 beträgt.

5. Verfahren nach einem oder mehreren der Ansprüche 1 bis 4, dadurch gekennzeichnet, daß man ein Abgas einleitet, das die zu entfernenden Verbindungen zu weniger als 50 ppm enthält.

6. Verfahren nach einem oder mehreren der Ansprüche 1 bis 5, dadurch gekennzeichnet, daß man ein Abgas einleitet, in dem Verbindungen enthalten sind, die einen Henry-Koeffizienten > 10 besitzen.

7. Verfahren gemäß den Ansprüchen 5 bis 6, dadurch gekennzeichnet, daß es sich bei den Verbindungen um geruchsintensive organische Schwefelverbindungen handelt.

8. Verfahren nach Anspruch 6, dadurch gekennzeichnet, daß es sich bei den Verbindungen um Methylmethacrylat und/oder Butylacrylat handelt.

**Claims**

1. A process for treating waste gas in which the oxygen-containing waste gas contaminated with biodegradable compounds is contacted with an aqueous suspension of microorganisms

   a) for 0.5 to 10 seconds in one or more sieve-plate columns,

   b) the suspension is then delivered at least partly to a holding tank and, after a residence time of 10 to 30 minutes, is recontacted with the waste gas as in a),

c) the biosuspension being exchanged for a biosuspension from the biological stage of a sewage treatment plant containing active microorganisms, in which inter alia the same pollutants to be removed from the waste gas are degraded, at an exchange rate of 5 to 50%/h, based on the holdup in the washer system.

2. A process as claimed in claim 1, characterized in that the gas and biosuspension are contacted in a sieve-plate column operated in several stages or in several sieve-plate columns arranged in tandem or parallel.

3. A process as claimed in claim 1 or 2, characterized in that the exchange rate of the biosuspension is below 10%/h.

4. A process as claimed in one or more of claims 1 to 3, characterized in that the ratio of the volumetric gas flow rate under normal conditions to the volumetric liquid flow rate is 1:0.005 to 1:0.015.

5. A process as claimed in one or more of claims 1 to 4, characterized in that a waste gas containing less than 50 ppm of the impurities to be removed is introduced.

6. A process as claimed in one or more of claims 1 to 5, characterized in that a waste gas containing compounds with a Henry coefficient of >10 is introduced.

7. A process as claimed in claims 5 to 6, characterized in that the compounds are odour-intensive organic sulfur compounds.

8. A process as claimed in claim 6, characterized in that the compounds are methyl methacrylate and/or butyl acrylate.

## Revendications

1. Procédé pour la purification d'air résiduaire dans lequel
   a) les gaz résiduaires pollués par des composés biologiquement dégradables, contenant de l'oxygène sont mis en contact avec une suspension aqueuse de microorganismes dans une ou plusieurs colonnes à fond perforé pendant un laps de temps compris entre 0,5 et 10 sec.,
   b) au moins une partie de la suspension est ensuite alimentée dans un récipient d'attente puis est à nouveau mise en contact après un temps de séjour de 10 à 30 min. avec les gaz résiduaires selon a),
   c) la biosuspension étant échangée, à un taux d'échange de 5 à 50 %/h par rapport à la quantité d'attente dans le système de lavage, contre une biosuspension contenant des microorganismes actifs provenant de l'étape biologique d'une installation de purification d'eaux résiduaires dans laquelle sont dégradées, entre autres, les mêmes substances nuisibles que celles à éliminer des gaz résiduaires.

2. Procédé selon la revendication 1, caractérisé en ce que le contact entre le gaz et la biosuspension est réalisé dans une colonne à fond perforé à plusieurs étapes ou dans plusieurs colonnes à fond perforé disposées parallèlement ou les unes derrière les autres.

3. Procédé selon les revendications 1 ou 2, caractérisé en ce que le taux d'échange de la biosuspension est inférieur à 10 %/h.

4. Procédé selon une ou plusieurs des revendications 1 à 3, caractérisé en ce que le rapport entre le courant volumique des gaz (sous des conditions normales) et le courant volumique de liquide est compris entre 1:0,005 et 1:0,015.

5. Procédé selon une ou plusieurs des revendications 1 à 4, caractérisé en ce qu'on introduit des gaz résiduaires dont la teneur en substances nuisibles à éliminer est inférieure à 50 ppm.

6. Procédé selon une ou plusieurs des revendications 1 à 5, caractérisé en ce qu'on introduit des gaz résiduaires contenant des composés dont le coefficient Henry est > à 10.

7. Procédé selon les revendications 5 à 6, caractérisé en ce qu'il s'agit de composés sulfurés organiques à forte odeur.

8. Procédé selon la revendication 6, caractérisé en ce que les composés sont du méthacrylate de méthyle et/ou de l'acrylate de butyle.

Abb. 1

Abb. 2